# EUROPÄISCHE PATENTSCHRIFT

(11) **EP 1 109 477 B1**
(45) Veröffentlichungstag und Bekanntmachung des Hinweises auf die Patenterteilung: **02.05.2003**
(21) Anmeldenummer: 99946070.2
(22) Anmeldetag: 31.08.1999
(51) Int. Cl.: A47G 19/14, A47G 19/16

(54) **KANNE**
TEE/COFFEE POT
THEIERE/CAFETIERE

(30) Priorität: 31.08.1998 DE 29815636 U
(43) Veröffentlichungstag der Anmeldung: 27.06.2001
(73) Patentinhaber: EMSA-Werke Wulf GmbH & Co. KG, 48282 Emsdetten (DE)
(72) Erfinder: HORSTMANN, Klaus, D-48485 Neuenkirchen (DE)
(74) Vertreter: Grünecker, August, Dipl.-Ing.
(86) Internationale Anmeldenummer: EP9906383
(87) Internationale Veröffentlichungsnummer: WO00011991

(56) Entgegenhaltungen:
- DE-A- 4 207 453
- DE-A- 4 432 547
- US-A- 1 412 674
- US-A- 2 343 017
- US-A- 4 482 083

## Beschreibung

Die Erfindung betrifft eine Kanne mit einem zum Einfüllen einer Flüssigkeit ausgebildeten Kannenkörper und einem in diesem angeordneten, mittels einer Handhabeeinrichtung sich zwischen einer Eintauchstellung und einer Auftauchstellung verschwenkbaren Siebkörper, welcher wenigstens eine Kammer zur Aufnahme eines Zugabestoffes wie Teeblätter, Kaffeepulver oder dgl. aufweist.

Eine gattungsgemäße Teekanne mit einer Teeaufnahmevorrichtung ist aus der DE 44 32 547 A1 bekannt. Diese halbkugelschalenförmige Kanne weist im Bereich ihres Henkels ein Schwenklager in Form eines nach oben weisenden, vorstehenden Flachkörpers auf. Das Schwenklager ist am oberen Ende des Henkels angeordnet und dient zur Aufnahme einer Öffnung eines Schwenkhebels, an dessen einem Ende ein kugelförmiger Siebkörper angeordnet ist. Die Öffnung im Schwenkhebel befindet sich im mittleren Bereich des Schwenkhebels, jedoch mit größerem Abstand zum Siebkörper als zum gegenüberliegenden Ende. Der als Handhabe ausgebildete Hebelbereich auf der anderen Seite der Öffnung ist an die Kontur des Henkels angepaßt und an diesem verrastbar. Im nicht verrasteten Zustand befindet sich der Siebkörper in einer heruntergeschwenkten Stellung, so daß dieser im Bedarfsfalle in z.B. heißes Wasser eintauchen kann (Eintauchstellung). Der Siebkörper befindet sich in dieser Stellung in Bodennähe des Kannenkörpers. Durch Draufdrücken auf die Oberseite des Handhabebereichs des Schwenkhebels wird der Siebkörper nach oben in eine im wesentlichen sich oberhalb der Wasseroberfläche befindliche Position (Auftauchstellung) geschwenkt. Sobald der Handhabebereich mit der Außenkontur des Henkels in Berührung kommt, erfolgt durch eine Arretiereinrichtung eine Verrastung, so daß der Siebkörper in dieser angehobenen Stellung gehalten wird.

Nachteilig bei einer derartigen Ausbildung ist, daß ein relativ langer Hebelarmabschnitt zwischen Schwenklager und Siebkörper vorhanden sein muß, um diesen ausreichend anheben und absenken zu können. Damit jedoch der Handhabebereich des Hebelarms nicht störend wirkt, darf dieser in der Praxis eine bestimmte Länge nicht überschreiten. Hierdurch ergeben sich ungünstige Hebelverhältnisse, wodurch zum einen die aufzubringende Kraft vergleichsweise hoch sein muß. Des weiteren läßt sich die Kraft nicht sehr genau dosieren, weshalb der Siebkörper zuweilen regelrecht aus der Flüssigkeit herausgeschleudert und durch den Anschlag des Handhabebereichs am Henkel abrupt abgestoppt wird. Aus diesem Grunde muß auf jeden Fall ein Spritzschutz vorgesehen sein, damit keine Flüssigkeit aus der Kanne geschleudert wird. Sollte aus Versehen der Deckel vergessen werden, könnte dies unangenehme Folgen haben. Des weiteren eignet sich eine derartige Lösung nur für relativ flache und sehr breite Kannen, weil nur bei diesen die gewünschten Wege durch die Schwenkbewegung zurückgelegt werden können.

Der Erfindung liegt daher die Aufgabe zugrunde, eine Kanne der eingangs genannten Art dahingehend zu verbessern, daß die Handhabung des Siebkörpers verbessert wird.

Diese Aufgabe wird bei einer gattungsgemäßen Kanne dadurch gelöst, daß die Handhabeeinrichtung ein Zugelement umfaßt, und daß am Kannenkörper eine Führungseinrichtung vorgesehen ist, in der das Zugelement längs einer vorgegebenen Bahn zum Verschwenken des Siebkörpers verschiebbar geführt ist.

Zwar ist es im Stand der Technik bereits bekannt, insbesondere kettenförmige Zugelemente zum Überführen eines Siebkörpers aus einer Eintauchstellung in eine Auftauchstellung zu verwenden. Jedoch wurden diese meist mittig durch den Deckel der Kanne hindurchgeführt und baumelten dann an der Außenseite herunter und waren dort zum Teil störend im Weg. Weiterführende Konstruktionen sahen noch zusätzlich vor, daß die Handhabe an der Kanne verrastet wurde, so daß das Zugmittel ständig unter Spannung stand. Aber selbst bei diesen Ausgestaltungen kam es zum Teil aufgrund der Zugspannung des Zugelementes zum Entriegeln des Deckels und zu schweren Verbrühungen.

Die Erfindung hat demgegenüber den Vorteil, daß das Zugelement exakt in einer Führungseinrichtung und entlang einer genau vorgegebenen Bahn verschiebbar geführt ist. Das bedeutet, daß das Zugelement eben nur entlang dieser vorgegebenen Bahn verschiebbar ist und nicht frei an der Kanne in der Auftauchstellung des Siebkörpers herumbaumelt. Insbesondere bei Kindern waren bislang im Stand der Technik frei baumelnde oder frei außerhalb der Kanne ergreifbare Zugelemente beliebte Spielobjekte, was zum Teil zu Unfällen durch Umwerfen der Kanne durch Ziehen am Zugelement führte.

Die Erfindung eröffnet die Möglichkeit, durch eine vielfältige Ausgestaltung der Führungseinrichtung die unterschiedlichsten Bahnen zum verschiebbaren Führen des Zugelementes vorzugeben. Des weiteren läßt sich eine Zugkraft an einem Zugelement viel besser dosieren und aufgrund der Tatsache, daß keine Übersetzung, wie bei einem Schwenkhebelsystem, vorhanden ist, die Verschiebebewegung des Zugelementes in direkte Höhenverschiebung des Siebkörpers umsetzen. Die Unfallgefahr wird hierdurch beträchtlich herabgesetzt.

Ein weiterer wesentlicher Vorteil der Erfindung besteht natürlich darin, daß keine Ablage für den Siebkörper bereitgestellt werden muß, da dieser bevorzugt in eine sich innerhalb der Kanne befindliche Position oberhalb des Flüssigkeitspegels verfahren werden kann. Der Siebkörper bleibt demnach während des gesamten Zubereitungs- und anschließenden Darreichungsvorgangs innerhalb des Kannenkörpers, so daß der Trinkgenuß nicht durch lästiges Entfernen eines Siebkörpers aus der Kanne nachhaltig gestört wird.

Damit das Zugelement keinen zu großen Belastungen ausgesetzt ist, z.B. durch Gleiten entlang einer Kante, ist gemäß einer Variante vorgesehen, daß das Zugelement in der Führungseinrichtung auf einer gekrümmten, insbesondere zu einer Kannenachse konvexen, Bahn längsverschiebbar geführt ist. Durch die zur Kannenachse konvex gekrümmten Bahn bleibt das Zugelement in der Nähe der Kanne, so daß überflüssig weit ausladende Führungseinrichtungen nicht vorgesehen werden müssen. Auch das Führen entlang der Außenkontur der Kanne ist bei einer solchen Ausgestaltung denkbar. Des weiteren entstehen günstige Reibungsverhältnisse in der Führungseinrichtung, da bei einer gekrümmten Bahn kein sprunghafter Anstieg der Reibkräfte auftritt.

Vorteilhafterweise kann das Zugelement ein im wesentlichen starres, der von der Führungseinrichtung vorgegebenen Bahn angepaßtes Bauelement sein. Durch den Begriff starres Bauelement sollen lediglich vollständig flexible Zugelemente, wie Bänder, Seile, Ketten und ähnliches ausgeschlossen werden. Das Bauelement soll so ausgestaltet sein, daß es im unbelasteten Zustand seine Form nicht verändert. Hierdurch werden sämtliche Nachteile, die solchen flexiblen Zugelementen zuteil sind, eleminiert. Das Zugelement und die Führungseinrichtung können als ineinander teleskopierbare Bauelemente ausgestaltet sein, so daß eine im wesentlichen verdeckte bzw. an die Kontur der Kanne angepaßte Verschiebung des Zugelementes erfolgt. Dadurch, daß das Zugelement starr ist, kann dieses zusätzlich Biegekräfte aufnehmen, weshalb dieses auch über einen bestimmten Bereich quer zu seiner Längserstreckung frei auskragen kann. Dies ist z.B. der Fall, wenn das Zugelement in der Eintauchstellung des Siebkörpers zum größten Teil aus der Führungseinrichtung ausgefahren ist. Hierdurch lassen sich die verschiedensten Positionen des Siebkörpers im Innern des Kannenkörpers einnehmen, auch wenn die Führungseinrichtung seitlich an der Kanne angeordnet ist.

Günstigerweise kann das Zugelement in einer Auftauchstellung des Siebkörpers größtenteils in die Führungseinrichtung eingefahren und in dieser gehalten sein. Hierdurch wird auch die Biegebelastung, der z.B. ein starres Zugelement in der Auftauchstellung ausgesetzt ist, sehr stark herabgesetzt. Es ist zu bedenken, daß in der Auftauchstellung der Siebkörper mit seiner nassen Füllung ein viel größeres Gewicht aufweist als vor dem Eintauchen in die Flüssigkeit.

In der Regel haben die vorbekannten Kannen einen Deckel, der auf eine obere Kannenöffnung lösbar aufgesetzt ist. Der Deckel kann beispielsweise in die Kannenöffnung eingesteckt, in oder auf die Kannenöffnung aufgeschraubt werden. Weiterhin sind Klappdeckel bekannt, die beispielsweise einseitig am Kannenkörper verschwenkbar gelagert sind. Um den Kannenkörper möglichst vollständig mit Flüssigkeit füllen zu können und trotzdem zumindest die mit dem Zusatzstoff gefüllte Kammer außerhalb der Flüssigkeit anordnen zu können, kann der Deckel einen zur Kannenöffnung offenen Innenraum aufweisen, in dem der Siebkörper in der Auftauchstellung zumindest teilweise angeordnet ist. Dadurch ergibt sich ein zusätzlicher Verfahrweg für den Siebkörper und der Befüllungsgrad der Kanne wird erhöht. Selbstverständlich kann der Siebkörper auch vollständig in den Innenraum des Deckels verschwenkbar sein.

Zur leichteren Handhabung der Kanne kann an dem Kannenkörper ein Henkel angeordnet sein, wobei der Henkel zumindest einen Bestandteil der Führungseinrichtung bildet. Da der Henkel in aller Regel seitlich von dem Kannenkörper absteht, ergeben sich ausreichend Anordnungsformen zur Unterbringung einer geeigneten Führungseinrichtung, die die gewünschte Verschiebelänge des Zugelementes bereitstellt.

Günstigerweise kann die von der Führungseinrichtung vorgegebene Bahn aus diesem Grunde der Henkelform angepaßt sein. Eine solche Ausgestaltung verträgt sich sehr gut mit einer gekrümmten Ausführung (Sichelform) des Zugelementes.

Um das Zugelement in einfacher Weise im Bereich des Henkels verstellen und gleichzeitig den Siebkörper zwischen Ein- und Auftauchstellung verschieben zu können, kann der Henkel eine im wesentlichen entlang seiner Längserstreckung verlaufende Führungsnut als Bestandteil der Führungseinrichtung aufweisen, in welcher das entsprechend angeformte Zugelement zwischen einer ersten, der Eintauchstellung des Siebkörpers zugeordneten, und einer zweiten, der Auftauchstellung des Siebkörpers zugeordneten, Stellung verschiebbar gelagert ist. Die Führungsnut kann beispielsweise auch im Innern des Henkels vorgesehen sein, wobei dann eine Zugriffsmöglichkeit zum Zugelement bereitgestellt werden muß. Es handelt sich hierbei um eine sehr kompakte Ausführungsform, da sich diese von außen nicht von herkömmlichen Kannen ohne Siebkörper unterscheiden muß.

Gemäß einer Variante kann der Henkel, die Führungsnut und das Zugelement im wesentlichen kreisbogenförmig gekrümmt und entsprechend ineinandersteckbar sein. Eine kreisbogenförmig gekrümmte Ausführung ergibt zum einen einen günstigen Henkel, der sicher ergriffen werden kann, und zum anderen läßt sich ein z.B. starres Zugelement sehr leicht auf einer Kreisbahn verschieben. Es versteht sich von selbst, daß durch die Verschiebung auf einer Kreisbahn nicht nur der Siebkörper in seiner vertikalen, sondern auch in seiner horizontalen Position verschiebbar ist.

Die Kanne kann so ausgebildet sein, daß die obere Kannenöffnung direkt am oberen Ende des Kannenkörpers ausgebildet ist. Dabei wird der Deckel direkt auf den Kannenkörper aufgesetzt. Auch ein entsprechender Ausgießer kann direkt im Kannenkörper ausgebildet sein. Bei einem Kannenkörper aus Glas ist dies in einfacher Weise durch entsprechende Formgebung möglich. Nachteilig bei einem solchen Glaskörper könnte allerdings sein, daß beim Aufsetzen und Abnehmen des Deckels oder bei Kontakt des Ausgießers aus Glas mit einem Gefäß eine Beschädigung auftritt. Um dies zu vermeiden, kann ein Aufsatzteil auf ein oberes Ende des Kannenkörpers aufgesetzt sein und zumindest mit Ausgießer und oberer Kannenöffnung ausgebildet sein. Dieses Aufsatzteil kann beispielsweise aus Kunststoff hergestellt sein. Das Aufsatzteil kann weiterhin mit dem Kannenkörper insbesondere aus Glas verschraubt, verrastet oder verklebt sein. Zwischen Aufsatzteil und Kannenkörper kann zur verbesserten Abdichtung ein Dichtring aus Gummi oder dgl. angeordnet sein.

Zur erleichterten Handhabung und Herstellung der Kanne kann der Henkel am Aufsatzteil angeformt sein.

Bei einem Kannenkörper ohne Aufsatzteil oder auch mit Aufsatzteil kann der Henkel auch direkt am Kannenkörper lösbar befestigt sein.

Insbesondere bei der Verwendung von gut klebbaren Materialien, wie Glas als Material für den Kannenkörper kann der Henkel auch mit dem Kannenkörper verklebt sein. Diese Verbindungstechnik ist selbst bei den in diesem Fall vorherrschenden Temperaturen sehr gut beherrschbar.

Zur einfachen Durchführung des Zugelementes vom Siebkörper in Richtung Henkel kann zwischen Deckel und Kannenkörper oder Aufsatzteil oder im Aufsatzteil eine Öffnung für das Zugelement ausgebildet sein, wobei die Öffnung Bestandteil der Führungseinrichtung ist.

Ein einfaches Ausführungsbeispiel des Zugelementes, welches gleichzeitig gut verschieblich entlang der Führungsnut ausgebildet ist, kann ein Zugelement aus einem Flachprofil mit mindestens einer Gleitfläche sein, die entlang der Führungsnut verschiebbar ist oder sind.

Zur vereinfachten Herstellung des Henkels mit entsprechender Führungsnut kann diese von der Außenseite des Henkels ausgebildet sein. In eine solche Führungsnut kann z.B. das Flachprofil flächenbündig eingelassen sein. Hierzu kann des weiteren vorteilhaft vorgesehen sein, daß die Führungsnut im Henkel im Querschnitt im wesentlichen V-förmig ausgebildet ist und das Flachprofil des Zugelementes einen entsprechend angepaßten Querschnitt aufweist, so daß das Zugelement im wesentlichen mit der Außenkontur des Henkels abschließend in der Führungsnut geführt ist.

In diesem Zusammenhang ist es als vorteilhaft anzusehen, wenn das Zugelement im Bereich des Henkels wenigstens eine Handhabe aufweist. Eine solche Handhabe kann beispielsweise ein von dem Flachprofil abstehender Nocken oder eine nach außen abstehende Öse bzw. ein Ring sein. Eine solche Handhabe kann auch nachträglich in eine entsprechende Bohrung im Flachprofil, insbesondere nach Durchführung des Zugelementes, durch die oben genannte Öffnung eingesetzt werden. Außerdem kann die Handhabe lösbar befestigt sein.

Um den Siebkörper in einfacher Weise am Zugelement befestigen zu können, kann dieser an seinem dem Siebkörper zugeordneten Ende als Haltehaken ausgebildet sein. Dieser Haltehaken kann in eine entsprechende Halteöffnung am Siebkörper eingreifen und dort lösbar befestigt sein.

Um insbesondere den Siebkörper in seiner Auftauchstellung sicher halten zu können und ein selbsttätiges Zurückbewegen in die Eintauchstellung zu verhindern, kann der Führungseinrichtung und/oder dem Henkel eine Arretiereinrichtung zum Festlegen des Zugelementes zumindest in seiner zweiten Stellung zugeordnet sein. Eine solche Arretiereinrichtung kann in unterschiedlicher Weise ausgeführt sein. Denkbar ist beispielsweise eine Rastöffnung in der Führung, in der bei Erreichen der zweiten Stellung ein entsprechender Rastvorsprung eingreift. Eine zweite Rastöffnung kann auch zur Festlegung der Eintauchstellung vorgesehen sein.

Zur einfachen Herstellung einer entsprechenden Arretiereinrichtung, die selbsttätig das Zugelement in einer zweiten Stellung festlegt, kann die Arretiereinrichtung als Verengung der Führung ausgebildet sein. Auf diese Weise wird durch einfachen Reibschluß zwischen Führung und Zugelement dieses in seiner zweiten Stellung gehalten und kann gleichzeitig durch nur geringen Kraftaufwand in Richtung erste Stellung verschoben werden.

Es besteht auch die Möglichkeit, die Arretiereinrichtung in Form eines Rasthakens am Zugelement und einer zugeordneten Rastnase in der Führungseinrichtung auszugestalten. Jeder Raststellung ist dann eine bestimmte Position des Siebkörpers zugeordnet. Insbesondere kann der Rasthaken am Endbereich des Zugelementes und die Rastnase in der Führungsnut des Henkels ausgebildet sein. Die Verrastung erfolgt dann integriert im vom Henkel umgebenen Bereich und somit an einer versteckt angeordneten Stelle.

Günstigerweise kann für jede Stellung des Zugelementes eine gesonderte Rastnase in der Führungsnut angeordnet sein, so daß das Zugelement lediglich einen Rasthaken aufweisen muß, um die verschiedenen Stellungen einzunehmen.

Insbesondere beim Kannenkörper aus Glas ist es als Vorteil anzusehen, wenn der Kannenkörper ein unteres, mit dem Henkel und/oder dem Aufsatzteil verbundenen Fußteil aufweist. Dieses kann ein lösbares Teil des Kannenkörpers sein und beispielsweise bei einem Kannenkörper aus Glas, aus Kunststoff oder Metall hergestellt sein.

Die Lösbarkeit des Fußteils kann dadurch erreicht sein, daß dieses über einen Klemmechanismus an dem unteren Bereich des Kannenkörpers lösbar festgeklemmt ist. Das Fußteil kann demnach aus hygienischen Gründen zum Säubern entfernt werden. In aller Regel wird der Kannenkörper auch ohne das Fußteil hingestellt werden können, so daß wahlweise ein Fußteil zu dekorativen Zwecken verwendet werden kann. Auch kann das Fußteil unterschiedlich mit verschiedenen Dekors ausgestaltbar sein.

Des weiteren besteht die Möglichkeit, daß das Fußteil aus einem wärmestabilen Material, insbesondere einem Metall, besteht. Hier bietet sich insbesondere Edelstahl an. Diese Ausführungsform hat auch den Vorteil, daß eine derartige Kanne mit ihrem Metallfuß auf ein Stövchen aufgestellt werden kann, da hier eine beträchtliche Hitzeentwicklung vorhanden ist, die von dem Fußteilmaterial ohne weiteres ausgehalten werden kann.

Um den Henkel relativ zum Kannenkörper gut zu befestigen, kann der Kannenkörper auf seiner Außenseite wenigstens eine Umfangsnut zur Aufnahme eines mit seinen beiden Enden am Henkel befestigten Drahtes aufweisen. Ein solcher Draht umrundet den Kannenkörper entlang der Umfangsnut und sichert so den Henkel am Kannenkörper durch die Befestigung der beiden Drahtenden am Henkel. Selbstverständlich können auch zwei solche Drähte beabstandet zueinander den Kannenkörper umrunden und am Henkel befestigt sein. Eine verbesserte Festlegung des Henkels relativ zum Kannenkörper ist dadurch erreichbar, wenn die beiden Enden des Drahtes seitlich entlang der Führungsnut für das Zugelement im Henkel bis in die Nachbarschaft zum Deckel geführt sind.

Die Anlage des Henkels am Kannenkörper kann weiterhin dadurch verbessert und ein Tragen der Kanne entsprechend sicherer sein, wenn der Henkel ein mit der Führung ausgebildeten Außenschenkel und einen an der Außenseite des Kannenkörpers anliegenden Innenschenkel aufweist, welche Schenkel miteinander an ihren Enden unter Einschluß einer Eingriffsöffnung verbunden sind. Die Eingriffsöffnung wird zum Tragen der Kanne verwendet, wobei mit der Eingriffsöffnung der Außenschenkel umgreifbar ist.

Um das Fußteil mit dem Henkel oder auf dem Aufsatzteil verbinden zu können, kann das Fußteil ein in Richtung Henkel bzw. Deckel oder Aufsatzteil entlang der Außenseite verlaufenden Verbindungsträger aufweisen.

Um den Siebkörper sowohl in einfacher Weise befüllen als auch zu reinigen und entleeren zu können, kann dieser aufklappbar und/oder teilbar in etwa zwei Hälften ausgebildet sein. Der Siebkörper ist in der Regel rund oder oval und etwa entlang seines Äquators aufklappbar oder teilbar. Bevorzugt kann der Siebkörper im wesentlichen parallel zu einer oder in einer vom Zugelement aufgespannten Ebene in eine linke und in eine rechte Siebkörperhälfte geteilt sein. Insbesondere wenn eine Siebkörperhälfte abgenommen und die andere noch mit dem Zugelement verbunden ist, kann das Zugelement zusammen mit der einen Siebkörperhälfte als Maß- bzw. Schöpflöffel verwendet werden, wenn eine lösbar Verbindung zwischen Führungseinrichtung und Zugelement gewählt ist.

An dem dem Siebkörper zugeordneten Ende des Zugelementes kann ein Ring angeordnet sein, an dem zumindest eine der beiden Siebkörperhälften aufsetzbar und zum Bilden des Siebkörpers mit diesen verbindbar sind. Die Siebkörperhälften können hierdurch sehr einfach mit dem Zugelement verbunden werden. Eine solche Verbindung läßt sich formschön ausgestalten und ist insbesondere hinsichtlich hygienischer Gründe sehr interessant, da der Übergang zwischen Ring und Zugelement ohne Möglichkeit zur Ansammlung von Ablagerungen ausgestaltet werden kann.

Hierzu können oder kann die mindestens eine Siebkörperhälfte mittels eines bajonettartigen Verschlusses miteinander oder mit dem Ring verbunden sein. Eine derartige Verbindung läßt sich sehr leicht zum Befüllen des Siebkörpers mit Zugabestoffen öffnen.

In den meisten Fällen ist eine Ausführungsform ausreichend, bei der die eine Siebkörperhälfte fest mit dem Zugelement verbunden ist und die andere Siebkörperhälfte lösbar mit dem Zugelement verbunden bzw. verbindbar ist. Dies ist insbesondere dann von Vorteil, wenn die fest mit dem Zugelement verbundene Siebkörperhälfte zusammen mit diesem als Maß- bzw. Schöpflöffel verwendet werden soll. Darüber hinaus kann die feste Siebkörperhälfte besser zum Lösen der anderen Siebkörperhälfte ergriffen werden und dient deshalb als Handhabe zum Öffnen und Schließen des Siebkörpers.

Aus optischen Gründen und zur verbesserten Kontrolle des Kanneninneren kann der Kannenkörper aus einem durchsichtigen, hitzebeständigen Material, insbesondere Glas, gebildet sein.

Für ein vereinfachtes Verschieben des Siebkörpers entlang insbesondere eines gekrümmten Weges ist es als günstig anzusehen, wenn der Kannenkörper ausgebaucht ist.

Für das Material des Deckels wird in der Regel auch Kunststoff verwendet, wobei zum verbesserten optischen Eindruck der Kunststoff galvanisiert sein kann. Ebenfalls kann der Deckel aus einem dünnen Metall geformt sein.

Das Zugelement ist ebenfalls in der Regel wie die erwähnten Drähte aus Metall, wie Aluminium, Stahl oder dgl. Dies gilt in der Regel ebenso für den Siebkörper. Eine Ausgestaltung aus Kunststoff ist ebenfalls denkbar.

Das Fußteil kann wie der Henkel aus Kunststoff oder ebenfalls aus Metall hergestellt sein.

Im folgenden wird die Erfindung anhand vorteilhafter Ausführungsbeispiele der in der Zeichnung beigefügten Figuren näher erläutert und beschrieben.

Es zeigen:
- Figur 1: einen Vertikalschnitt durch eine erfindungsgemäße Kanne nach einem ersten Ausführungsbeispiel;
- Figur 2: eine Draufsicht auf die Kanne nach Figur 1;
- Figur 3: eine Seitenansicht eines zweiten Ausführungsbeispiels einer erfindungsgemäßen Kanne;
- Figur 4: ein Ausführungsbeispiel für eine Arretiereinrichtung zur Anwendung bei der erfindungsgemäßen Kanne;
- Figur 5: einen Vollschnitt durch ein drittes Ausführungsbeispiel einer erfindungsgemäßen Kanne;
- Figur 6: eine perspektivische Draufsicht auf die Kanne ohne Deckel aus Figur 5, wobei sich der Siebkörper in der Auftaucnstellung befindet;
- Figur 7: eine Ansicht ähnlich der Figur 6, wobei sich der Siebkörper in seiner Eintauchstellung befindet;
- Figur 8: eine perspektivische Seitenansicht des Henkels der Kanne aus Figur 5;
- Figur 9: den Henkel aus Figur 8 im Vollschnitt; und
- Figur 10: das Zugelement aus Figur 5 mit angeformtem Ring in einer vergrößerten, perspektivischen Seitenansicht.

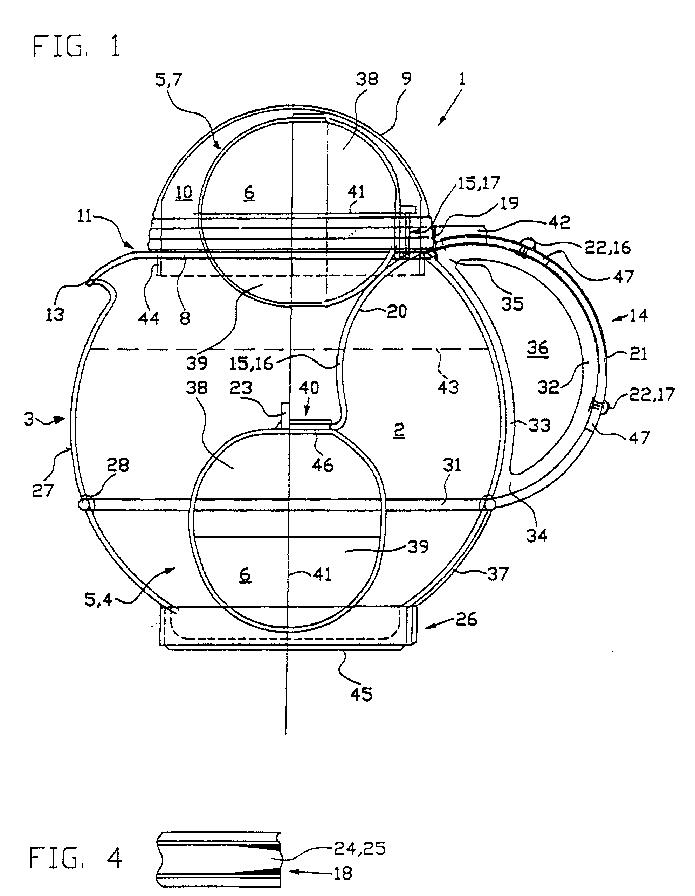

Figur 1 zeigt einen Vertikalschnitt durch ein erstes Ausführungsbeispiel einer erfindungsgemäßen Kanne 1. Bis zu einem gestrichelt dargestellten Pegel 43 ist eine Flüssigkeit 2 in einen Kannenkörper 3 der Kanne 1 eingefüllt. Der Kannenkörper weist eine ausgebauchte Außenseite 27 auf, wobei einseitig an dieser Außenseite ein Henkel 14 zur Handhabung der Kanne 1 angeordnet ist.

Am oberen Ende 11 des Kannenkörpers 3 ist eine obere Kannenöffnung 8 mit zum Henkel 14 gegenüberliegenden Ausgießer 13 angeordnet. Auf die obere Kannenöffnung 8 ist ein lösbarer Deckel 9 aufgesetzt. Dieser hat in etwa die Form einer Halbkugel mit hohlem Innenraum 10, der in Richtung oberer Kannenöffnung 8 geöffnet ist. Vom Deckel 9 steht ein in die obere Kannenöffnung 8 einsetzbarer Rand 44 ab, durch den der Deckel 9 am Kannenkörper 3 gehalten und gleichzeitig die obere Kannenöffnung 8 abgedichtet ist.

Am unteren Ende des Kannenkörpers 3 gegenüberliegend zum Deckel 9 ist ein Fußteil 26 angeordnet, in dem der Kannenkörper 3 beispielsweise formschlüssig oder kraftschlüssig gehalten ist. Zur weiteren Stabilisierung der Kanne 1 ist mit dem Fußteil 26 ein Verbindungsträger 37 beispielsweise durch Verschweißen verbunden, der sich entlang der Außenseite 27 des Kannenkörpers 3 in Richtung Henkel 14 erstreckt.

Der Henkel 14 weist einen in etwa teilkreisförmigen Außenschenkel 32 und einen an der Außenseite 27 des Kannenkörpers 3 anliegenden Innenschenkel 33 auf. Diese sind an ihren unteren und oberen Enden 34, 35 miteinander verbunden und schließen eine Eingriffsöffnung 36 ein. Das obere Ende 35 der Schenkel 32, 33 ist seitlich neben dem oberen Ende 11 des Kannenkörpers 3 angeordnet und vom Außenschenkel 32 steht ein Schulterteil 42 nach oben ab, das mit seinem dem Deckel 9 zuweisenden Ende an diesem anliegt.

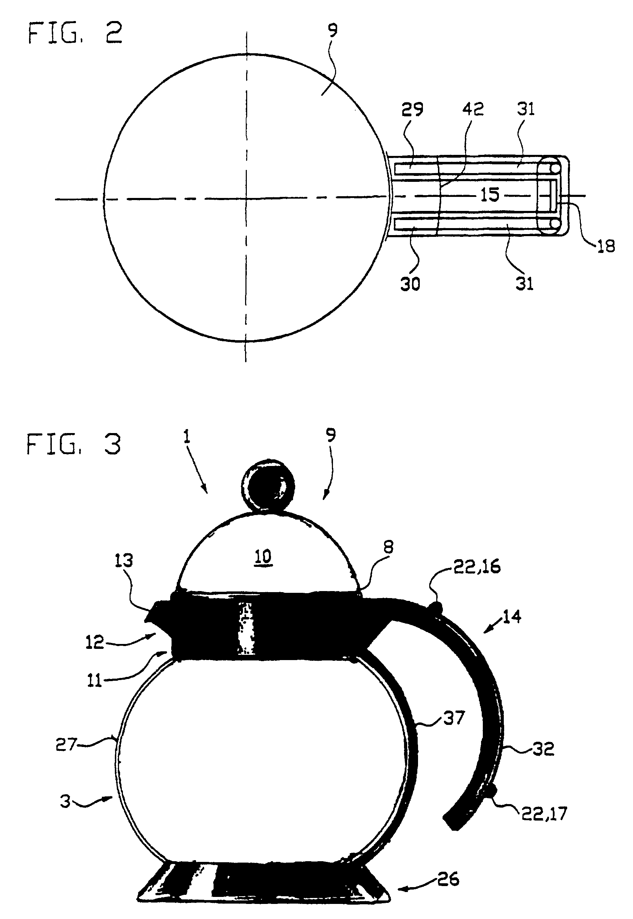

Entlang einer Außenseite 21 des Außenschenkels 32 sind zwei Endabschnitte eines Runddrahtes 31 geführt, siehe auch Figur 2, der um den Kannenkörper 3 in einer in dessen Außenseite 27 ausgebildeten Umfangsnut 28 herumgeführt ist. Die Umfangsnut 28 erstreckt sich im wesentlichen parallel zu einer Aufstandsfläche 45 auf einer Unterseite des Fußteils 26. Die Endabschnitte des Drahtes 31 sind, siehe Figur 2, bis zum Schulterteil 42 entlang der Außenseite 21 des Außenschenkels 32 geführt und dort mit ihren Enden 29 und 30 eingesteckt und befestigt.

Der Verbindungsträger 37 erstreckt sich entlang der Außenfläche 27 des Kannenkörpers 3 bis in etwa zur Umfangsnut 28 und wird dort in der Regel durch Verschweißen mit dem Draht 31 an diesem befestigt.

Innerhalb des Kannenkörpers 3 ist ein Siebkörper 5 zwischen einer unteren Eintauchstellung 4 und einer oberen Auftauchstellung 7 verschiebbar gelagert. In der Eintauchstellung 4 ist der Siebkörper 5 benachbart zum Fußteil 26 und teilweise in diesem angeordnet. In der Auftauchstellung 7 ist der Siebkörper 5 in den hohlen Innenraum 10 des Deckels 9 hineinbewegt und oberhalb des Flüssigkeitspegels 43 angeordnet. In dem Siebkörper 5 ist zumindest eine Kammer 6 ausgebildet, in die ein Zusatzstoff wie Teeblätter, Kaffeepulver oder dergleichen einfüllbar ist. In der Eintauchstellung 4 ist dieser Zusatzstoff mit der in der Regel heißen Flüssigkeit 2 in Kontakt und ein Getränk wie Tee, Kaffee oder dergleichen wird hergestellt. In der Auftauchstellung 7 ist der Zusatzstoff von der Flüssigkeit getrennt.

Der Siebkörper 5 ist in der Regel aus einer ersten und einer zweiten Hälfte 38, 39 zusammengesetzt, die entlang einer Teilung 41 in etwa entlang eines Äquators des im wesentlichen kugelförmigen Siebkörpers 5 miteinander in Berührung sind. Die beiden Hälften 38, 39 können miteinander verschraubbar sein. Weiterhin kann beispielsweise die Hälfte 38, siehe Auftauchstellung 7, gegenüber der zweiten Hälfte 39 im Bereich der Teilung 41 verschwenkbar gelagert sein, um den Siebkörper 5 zu öffnen. Zum Verschließen des Siebkörpers sind verschiedene Mechanismen einsetzbar, die an sich bekannt sind.

Seitlich am Siebkörper ist ein Zugelement 15, in Form eines sichelförmigen Arms, mittels seines als Haltehaken 23 ausgebildeten Endes 40 lösbar befestigt. Der Haltehaken 23 greift in eine entsprechende Haltehülse 46 ein, die beim dargestellten Ausführungsbeispiel an der zweiten Hälfte 39 des Siebkörpers 5 angeordnet ist. Das Zugelement 15 verläuft gekrümmt mit im wesentlichen gleichen Krümmungsradius wie der Außenschenkel 32 des Henkels 14. Zwischen Henkel 14 und Deckel 9 ist im Bereich der oberen Kannenöffnung 8 eine Öffnung 19 zur Durchführung des Zugelementes 15 ausgebildet, die sich in dem Schulterteil 42 fortsetzt. Durch diese Öffnung ist das Zugelement so weit durchgeführt, daß es auf der Außenseite 21 des Henkels 14 aus dem Schulterteil 42 vorsteht. Auf der Außenseite 21 des Henkels 14 ist für das aus einem Flachprofil gebildeten Zugelement 15 eine Führung ausgebildet, entlang der das Zugelement zum Bewegen des Siebkörpers 5 von Eintauchstellung in Auftauchstellung und umgekehrt verschiebbar ist. Dabei liegt eine Flachseite 20 als Gleitfläche auf der Außenseite 21 in der Führungsnut 18, siehe Figur 2, an.

Um mittels des Zugelementes manuell den Siebkörper einfach bewegen zu können, ist am Zugelement 15 eine Handhabe 22 angeordnet. Diese kann beispielsweise als in einer Bohrung des Zugelementes 15 befestigter Nocken ausgebildet sein.

Befindet sich der Siebkörper 5 in Eintauchstellung 4, ist das Zugelement 15 in seiner ersten Stellung 16 angeordnet, in der die Handhabe 22 benachbart zum Schulterteil 42 angeordnet ist. Zum Bewegen des Siebkörpers 5 in die Auftauchstellung 7 wird das Zugelement 15 mittels der Handhabe 22 entlang der Führungsnut 18 in Richtung Fußteil 26 verschoben, bis es in seiner der Auftauchstellung 7 des Siebkörpers 5 entsprechenden zweiten Stellung 17 angeordnet ist.

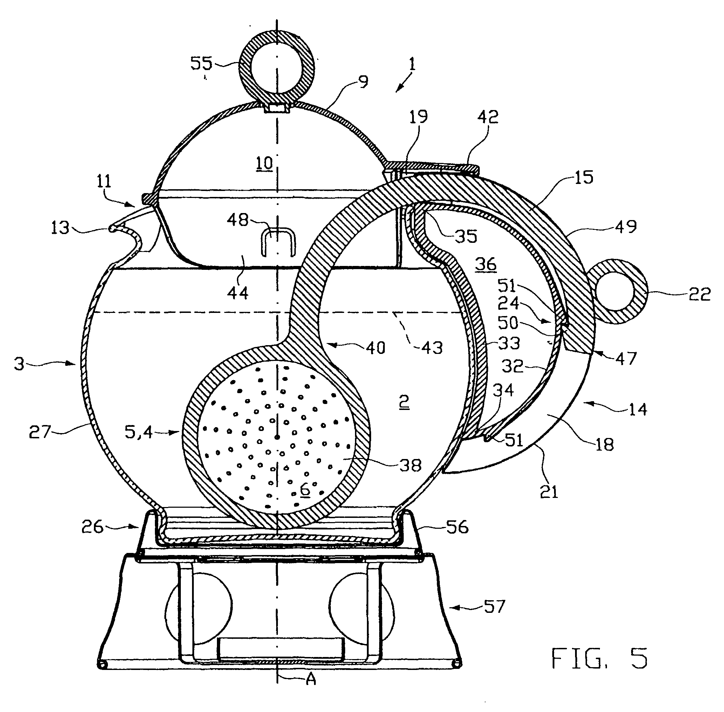

Um das Zugelement 15 in der zweiten Stellung 17 und damit den Siebkörper 5 in der Auftauchstellung 7 zu halten, kann die Führungsnut 18, siehe Figur 4, eine Arretiereinrichtung 24 in Form einer Verengung 25 aufweisen. In diese Verengung ist ein Ende 47 des Zugelementes 15 in der zweiten Stellung 17 hineinschiebbar und zum Zurückverschieben in die erste Stellung 16 wieder herausziehbar.

In Figur 2 ist eine Draufsicht auf die Kanne 1 nach Figur 1 dargestellt. Zur Vereinfachung ist der übrige Kannenkörper 3 mit beispielsweise Ausgießer 13 nicht dargestellt.

In Figur 2 ist insbesondere erkennbar, daß Enden 29, 30 des Drahtes 31 im Schulterteil 42 eingesteckt und dort befestigt sind. Die Enden 29 und 30 sind seitlich versetzt und parallel zur Führungsnut 18 mit in dieser angeordnetem Zugelement 15 angeordnet.

Es sei an dieser Stelle angemerkt, daß die Führungsnut 18 auch als Hohlführung innerhalb des Außenschenkels 32 des Henkels 14 ausgebildet sein kann, wobei nur die Handhabe 22 nach außen zur manuellen Bedienung vorsteht.

In Figur 3 ist ein zweites Ausführungsbeispiel der erfindungsgemäßen Kanne 1 dargestellt. Gleiche Teile sind mit gleichen Bezugszeichen versehen und werden nur noch teilweise erwähnt.

Das zweite Ausführungsbeispiel unterscheidet sich vom ersten insbesondere dadurch, daß der Kannenkörper 3 zwischen dem Fußteil 26 und einem oberen Aufsatzteil 12 angeordnet ist. Das Aufsatzteil 12 ist auf das obere Ende 11 des Kannenkörpers aufgesetzt und dort befestigt. Die obere Kannenöffnung 8 wird entsprechend durch ein oberes Ende des Aufsatzteils 12 gebildet und ist durch einen Deckel 9 verschließbar. Am Aufsatzteil 12 ist ein Ausgießer 13 und gegenüberliegend zu diesem ein Henkel 14 angeformt. Der Henkel 14 weist im wesentlichen nur durch einen Außenschenkel 32 auf und ist ansonsten wie der Henkel 14 nach Figur 1 mit Führung 18 und darin gleitverschieblich gelagertem Zugelement 15 mit Handhabe 22 ausgebildet.

Als weiterer Unterschied zum ersten Ausführungsbeispiel ist bei Figur 3 kein zusätzlicher Draht 31 in einer Umfangsnut 28 um den Kannenkörper 3 herumgeführt und statt dessen ist der Verbindungsträger 37 entlang der gesamten Außenseite 27 des Kannenkörpers 3 vom Fußteil 26 bis zum Aufsatzteil 12 herumgeführt. Der Verbindungsträger kann beispielsweise als Doppeldraht ausgeführt sein, der sowohl im Fußteil 26 als auch im Aufsatzteil 12 befestigt ist. Aufsatzteil 12 und Fußteil 26 können aus Kunststoff gebildet sein, die mit dem Kannenkörper form- oder kraftschlüssig verbunden sind. Insbesondere im Bereich des Aufsatzteils 12 kann weiterhin zwischen diesem und dem Kannenkörper ein Gummiring (nicht dargestellt) zur gegenseitigen Abdichtung angeordnet sein.

Weiterhin können Fußteil 26 und/oder Aufsatzteil 12 aus einem Metall hergestellt sein, das durch Verschweißen mit dem Doppeldraht als Verbindungsträger 37 verbunden ist.

Im folgenden wird anhand der Figuren 5 bis 10 ein weiteres Ausführungsbeispiel der vorliegenden Erfindung näher erläutert. Sofern auf gleiche und ähnliche Bauteile Bezug genommen wird, werden gleiche Bezugsziffern verwendet. Im wesentlichen wird nur auf die grundlegenden Unterschiede zu den vorangegangenen Ausführungsbeispielen eingegangen, so daß die obige Beschreibung sinngemäß übertragbar ist.

Der Hauptunterschied besteht prinzipiell in der Ausgestaltung des Zugelementes 15 mit Siebkörper 5 und dazugehörigen Führungseinrichtung.

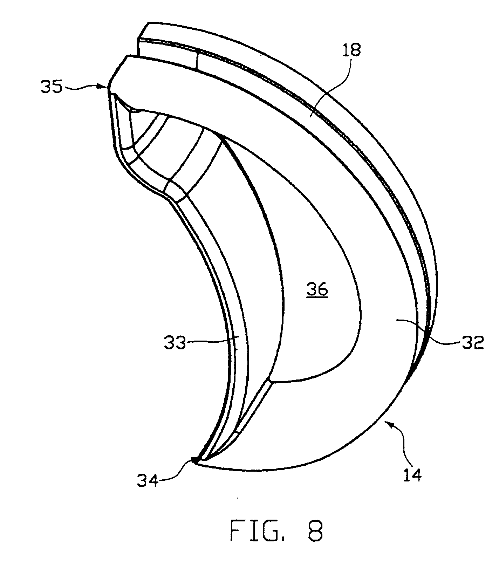

Insbesondere anhand der Figur 8 ist zu erkennen, daß der seitlich an den Kannenkörper 3 angesetzte Griff in seinem bogenförmigen Außenschenkel 32 eine vom oberen Ende 35 zum unteren Ende 34 verlaufende Führungsnut 18 aufweist. Die Führungsnut 18 erstreckt sich über die gesamte Länge der Außenseite des Außenschenkels 32 und weist im Querschnitt im wesentlichen eine V-Form auf. Eine Mittellinie der Führungsnut 18 liegt in einer Ebene mit der Kantenachse A. Die Führungsnut 18 ist nach außen hin offen und lediglich in ihrem im oberen Ende 35 zugeordneten Bereich von dem Schulterteil 42 des Deckels 9 abgedeckt, so daß in diesem Bereich eine geschlossene Führung für das Zugelement 15 gebildet ist. Der Deckel 9 ist aus diesem Grunde mittels einer Verriegelungseinrichtung 48 an der Kanne lösbar verrastet. Die Verriegelungseinrichtung 48 befindet sich an dem Rand 44 an der Unterkante des Deckels 9, der lediglich im Bereich des Ausgießers 13 und zum Bilden der Öffnung 19 (zum Durchführen des Zugelementes 15) Durchbrüche aufweist.

Die Führungsnut 18 ist von im wesentlichen gleichmäßiger Tiefe und verläuft, wie der Außenschenkel 32 des Henkels 14, kreisbogenförmig.

An die V-förmige Querschnittsform der Führungsnut 18 ist die Querschnittsform des sichelförmigen Zugelementes 15 angepaßt. Dieses ist demnach ebenfalls im Querschnitt V-förmig und kann derart verschiebbar in der Führungsnut 18 angeordnet werden, daß die Außenseite 49 des Zugelementes 15 im wesentlichen bündig mit der Außenseite 21 des Henkels 14 abschließt. Die Länge des Zugelementes 15 ist so gewählt, daß im wesentlichen ein halber Kreisring mit im wesentlichen gleichen Radius wie die Führungsnut 18 gebildet ist.

Auf der Außenseite 49 des Endes 47 des Zugelementes 15 ist eine Handhabe 22 in Form einer ringförmigen Öse angeordnet, durch die sich das Zugelement 15 in der Führungsnut 18 verschieben läßt. Auf der Innenseite des Zugelementes 15 befindet sich am Ende 47 ein Rasthaken 50, der mit entsprechend ausgestalteten Rastnasen 51 am Grund der Führungsnut 18 verrastbar ist. Im vorliegenden Ausführungsbeispiel sind zwei Rastnasen 51 vorgesehen. Die obere Rastnase 51 repräsentiert die Eintauchstellung 4 des Siebkörpers 5 und die untere Rastnase 51 repräsentiert die Auftauchstellung 7 des Siebkörpers 5. Die Anordnung der oberen Rastnase 51 ist so gewählt, daß der Siebkörper 5 in der Eintauchstellung 4 noch einen gewissen Abstand zum Boden des Kannenkörpers 3 aufweist und dort nicht aufliegt.

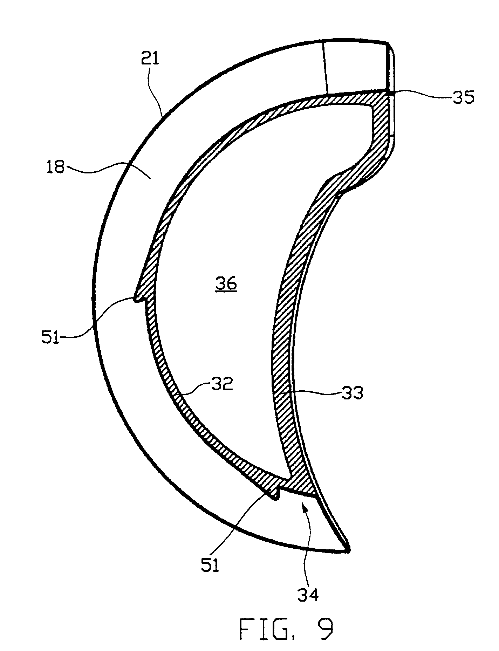

Die Rastnasen 51 sind insbesondere in der Figur 9 sehr gut zu erkennen. Sie liegen auf dem Kreisbogen der Führungsnut 18 um ca. 70° auseinander.

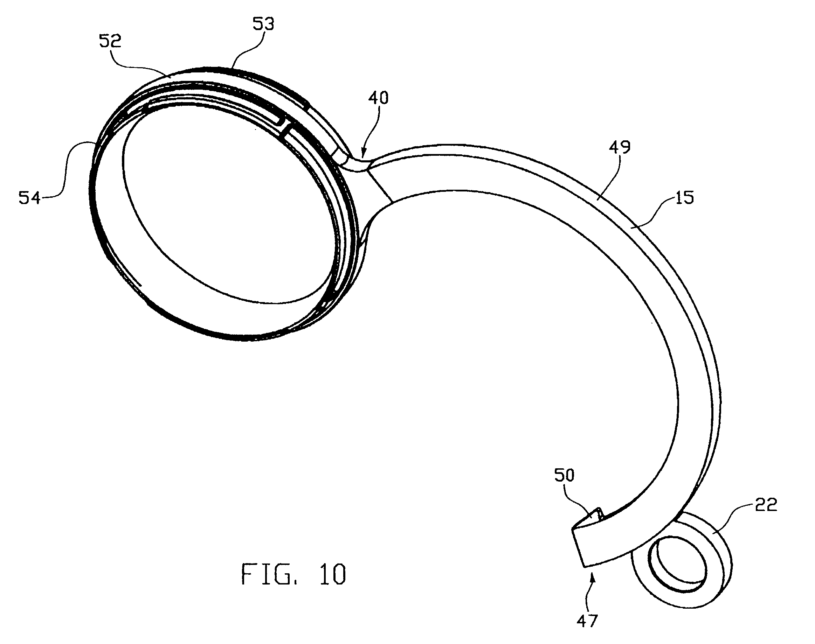

Anhand der Figur 10 ist ebenfalls zu erkennen, daß an dem Ende 40 des Zugelementes 15 ein Haltering 52 angeformt ist, dessen Kreisringquerschnitt im wesentlichen in Verlängerung bzw. parallel zur vom sichelförmigen Zugelement 15 aufgespannten Ebene ausgerichtet ist. Der Haltering 52 ist einteilig mit dem Zugelement 15 ausgebildet, so daß das gesamte, in Figur 10 dargestellte Element z.B. durch Spritzgußtechnik hergestellt werden kann. An beiden Enden des Halteringes 52 ist jeweils eine Bajonettverschlußaufnahme 53 und 54 angeordnet. Der Durchmesser des Halteringes 52 entspricht im wesentlichen dem Durchmesser des kugelförmigen Siebkörpers 5, von dem der Haltering 52 fester Bestandteil ist. Auf beide Seiten des Halteringes 52 wird mittels des Bajonettverschlusses 53 bzw. 54 jeweils eine annähernd halbhohlkugelförmige erste Hälfte 38 und zweite Hälfte 39 des Siebkörpers 5 aufgesetzt und arretiert. Die erste und zweite Hälfte 38, 39 sind dann jeweils mit den Sieböffnungen versehen.

Da das Zugelement 15 mit Siebkörper 5 bei nicht aufgesetztem Deckel 9 sehr leicht aus der Kanne 1 entnommen werden kann, ist eine einfache Reinigung dieser Einheit möglich. Darüber hinaus besteht die Möglichkeit, dieses Element als Maß- bzw. Schöpflöffel zu verwenden, wenn eine der beiden Hälften 38 bzw. 39 heruntergeschraubt ist.

Sobald der Deckel 9 mit seiner Verriegelungseinrichtung 48 an dem Kannenkörper 3 arretiert ist, läßt sich das Zugelement 15 nicht mehr aus der Öffnung 19 entfernen.

Zusätzlich weist das in den Figuren 5 bis 10 dargestellte Ausführungsbeispiel noch eine hohlkugelförmige Handhabe 55 auf der Spitze des kalottenförmigen Deckels 9 auf. Das Fußteil 26 besteht aus einem auf den unteren Abschnitt des aus Glas bestehenden Kannenkörpers 3 aufgesetzten Metallstandring 56, der aufgrund der Formgebung des unteren Endes des Kannenkörpers 3 mit diesem lösbar federverrastet bzw. mittels eines Klemmechanismus mit diesem verbunden ist. Des weiteren ist ein Stövchen 57 vorgesehen, auf das der Standring 56 im wesentlichen formschlüssig aufgesetzt werden kann.

Im folgenden werden noch einige Anmerkungen zur Funktionsweise dieses Ausführungsbeispieles gemacht.

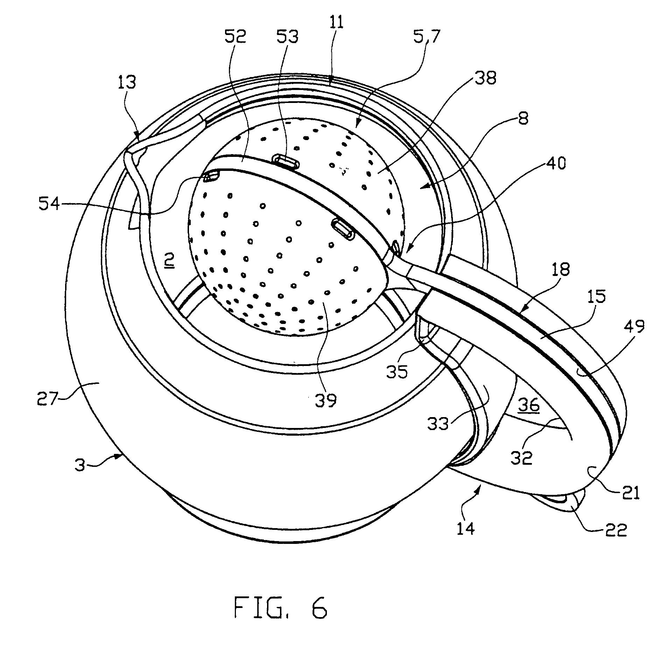

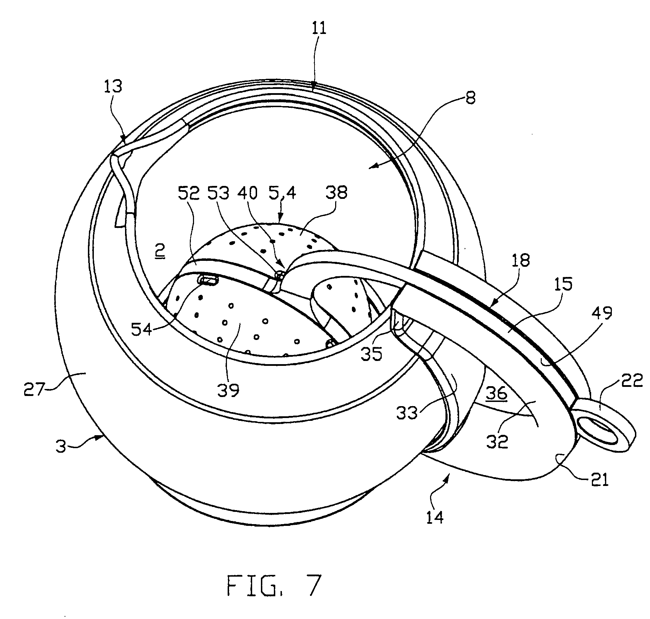

In der Figur 5 ist die ebenfalls in Figur 7 dargestellte Anordnung des Siebkörpers 5 in der Eintauchstellung 4 gezeichnet. Anhand der Figur 7 ist zu erkennen, wie die beiden Hälften 38 und 39 des Siebkörpers mit dem Haltering 52 verbunden sind. In dieser Stellung ist der Rasthaken 50 mit der Rastnase 51 verrrastet, so daß die Position des Siebkörpers 5 genau definiert ist. In dieser Stellung befindet sich der kugelförmige Siebkörper mit seinem Mittelpunkt im wesentlichen exakt auf der Kannenachse A. Möchte ein Benutzer nunmehr den Siebkörper 5 von der Eintauchstellung 4 in die Auftauchstellung 7 (wie in Figur 6 dargestellt) überführen, so greift er mit seinem Finger durch die ösenförmige Handhabe 22 und zieht das im wesentlichen starre Zugelement 15 nach unten. Aufgrund der sichelförmigen Form 15 des Zugelementes sowie der Führung in der Führungsnut 18 mit der Unterstützung der Öffnung 19 und der Schulter 42 am Deckel 9 wird das Zugelement 15 auf einer genau vorbestimmten Bahn bewegt. Im vorliegenden Fall handelt es sich um eine Kreisbahn. Das bedeutet, daß das Zugelement 15 keine Möglichkeit hat, einen anderen Weg einzuschlagen. Das Zugelement 15 wird mittels der Handhabe 22 solange verschoben, bis der Rasthaken 50 mit der unteren Rastnase 51 verrastet. Bei diesem Vorgang wird gleichzeitig der Siebkörper 5 angehoben, weil das Zugelement 15 immer weiter in die Führungseinrichtung eingefahren wird.

Die Bogenform des Zugelementes 15 und der Führungseinrichtung, die Anordnung des Siebkörpers 5 sowie die Position des Henkels 14 sind so zueinander gewählt, daß sich der Siebkörper 5 in der Auftauchstellung mit seinem Mittelpunkt wieder ebenfalls auf der mittleren Hauptachse A befindet. Aufgrund dieser Ausgestaltung benötigt der Siebkörper lediglich eine geringe seitliche Bewegungsfreiheit, um von der unteren in die obere Stellung überführt zu werden. Da mit diesem Verschiebemechanismus eine beachtliche vertikale Verstellung erreichbar ist, kann dieser auch bei schlankeren bzw. höheren Kannen angewendet werden.

Durch die exakte Führung des Zugelementes kann der Benutzer diesen Vorgang sehr genau steuern. Die Geschwindigkeit, mit der der Siebkörper 5 aus der Flüssigkeit 2 auftaucht, wird niemals so groß sein können, daß eine Spritzgefahr besteht.

Ergänzend sei anzumerken, daß bei den verschiedenen Ausführungsformen das Zugelement 15 neben einer Zugbeanspruchung auch eine Biegebeanspruchung aufnehmen muß und daher eine ausreichende Festigkeit aufweisen soll. Allerdings wird die Biegebelastung mit zunehmendem Einfahren des Zugelementes 15 geringer, so daß ein schwerer, mit einer nassen Ladung beinhalteter Siebkörper 5 nicht automatisch zur höheren Belastung führt.

## Patentansprüche

1. Kanne (1) mit einem zum Einfüllen einer Flüssigkeit (2) ausgebildeten Kannenkörper (3) und einem in diesem angeordneten, mittels einer Handhabeeinrichtung zwischen einer Eintauchstellung (4) und einer Auftauchstellung (7) verschwenkbaren Siebkörper (5), welcher wenigstens eine Kammer (6) zur Aufnahme eines Zugabestoffes wie Teeblätter, Kaffeepulver oder dgl. aufweist,
**dadurch gekennzeichnet,**
**daß** die Handhabeeinrichtung ein Zugelement (15) zum Verschwenken des Siebkörpers (5) umfaßt und daß am Kannenkörper (3) eine Führungseinrichtung (18, 19) vorgesehen ist, in der das Zugelement (15) längs einer vorgegebenen Bahn zum Verschwenken des Siebkörpers (5) verschiebbar geführt ist.

2. Kanne nach Anspruch 1,
**dadurch gekennzeichnet,**
**daß** das Zugelement (15) in der Führungseinrichtung auf einer gekrümmten, insbesonder zu einer Kannenachse (A) konvexen, Bahn längsverschiebbar geführt ist.

3. Kanne nach Anspruch 1 oder 2,
**dadurch gekennzeichnet,**
**daß** das Zugelement (15) ein im wesentlichen starres, der von der Führungseinrichtung vorgegebenen Bahn angepaßtes Bauelement ist.

4. Kanne nach wenigstens einem der vorangehenden Ansprüche,
**dadurch gekennzeichnet,**
**daß** das Zugelement (15) in der Auftauchstelle (7) des Siebkörpers (5) größtenteils in die Führungseinrichtung eingefahren und in dieser gehalten ist.

5. Kanne nach wenigstens einem der vorangehenden Ansprüche, mit einem auf eine obere Kannenöffnung (8) aufsetzbaren Deckel (9),
**dadurch gekennzeichnet,**
**daß** der Deckel (9) einen zur oberen Kannenöffnung (8) offenen Innenraum (10) aufweist, in dem der Siebkörper (5) in Auftauchstellung (7) zumindest teilweise angeordnet ist.

6. Kanne nach wenigstens einem der vorangehenden Ansprüche,
**dadurch gekennzeichnet,**
**daß** an dem Kannenkörper (3) ein Henkel (14) angeordnet ist, wobei der Henkel (14) zumindest einen Bestandteil der Führungseinrichtung bildet.

7. Kanne nach wenigstens einem der vorangehenden Ansprüche,
**dadurch gekennzeichnet,**
**daß** die von der Führungseinrichtung vorgegebene Bahn der Henkelform angepaßt ist.

8. Kanne nach wenigstens einem der vorangehenden Ansprüche,
**dadurch gekennzeichnet,**
**daß** der Henkel (14) eine im wesentlichen entlang seiner Längserstreckung verlaufende Führungsnut (18) als Bestandteil der Führungseinrichtung aufweist, in welcher das entsprechend angeformte Zugelement (15) zwischen einer ersten, der Eintauchstellung (4) des Siebkörpers (5) zugeordneten, und einer zweiten, der Auftauchstellung (7) des Siebkörpers (5) zugeordneten, Stellung (16, 17) verschiebbar gelagert ist.

9. Kanne nach wenigstens einem der vorangehenden Ansprüche,
**dadurch gekennzeichnet,**
**daß** der Henkel (14), die Führungsnut (18) und das Zugelement (15) im wesentlichen kreisbogenförmig gekrümmt und entsprechend ineinandersteckbar sind.

10. Kanne nach wenigstens einem der vorangehenden Ansprüche,
**dadurch gekennzeichnet,**
**daß** die obere Kannenöffnung (8) am oberen Ende (11) des Kannenkörpers (3) ausgebildet ist.

11. Kanne nach wenigstens einem der vorangehenden Ansprüche,
**dadurch gekennzeichnet,**
**daß** ein Aufsatzteil (12) auf ein oberes Ende (11) des Kannenkörpers (3) aufgesetzt ist und zumindest mit Ausgießer (13) und oberer Kannenöffnung (18) ausgebildet ist.

12. Kanne nach wenigstens einem der vorangehenden Ansprüche,
**dadurch gekennzeichnet,**
**daß** der Henkel (14) am Aufsatzteil (12) angeformt ist.

13. Kanne nach wenigstens einem der vorangehenden Ansprüche,
**dadurch gekennzeichnet,**
**daß** der Henkel (14) lösbar am Kannenkörper (3) befestigt ist.

14. Kanne nach wenigstens einem der vorangehenden Ansprüche,
**dadurch gekennzeichnet,**
**daß** der Henkel (14) mit dem Kannenkörper (3) verklebt ist.

15. Kanne nach wenigstens einem der vorangehenden Ansprüche,
**dadurch gekennzeichnet,**
**daß** zwischen Deckel (9) und Kannenkörper (3) oder Aufsatzteil (12) oder im Aufsatzteil (12) eine Öffnung (19) zur Durchführung des Zugelementes (15) in Richtung Henkel (14) ausgebildet ist, wobei die Öffnung (19) Bestandteil der Führungseinrichtung ist.

16. Kanne nach wenigstens einem der vorangehenden Ansprüche,
**dadurch gekennzeichnet,**
**daß** das Zugelement (15) aus einem Flachprofil mit mindestens einer Gleitfläche gebildet ist, die entlang der Führungsnut (18) verschiebbar ist oder sind.

17. Kanne nach wenigstens einem der vorangehenden Ansprüche,
**dadurch gekennzeichnet,**
**daß** die Führungsnut (18) auf einer Außenseite (21) des Henkels (14) ausgebildet ist.

18. Kanne nach wenigstens einem der vorangehenden Ansprüche,
**dadurch gekennzeichnet,**
**daß** die Führungsnut (18) im Henkel (14) im Querschnitt im wesentlichen V-förmig ausgebildet ist und das Flachprofil des Zugelementes (15) einen entsprechend angepaßten Querschnitt aufweist, so daß das Zugelement (15) im wesentlichen mit der Außenkontur des Henkels (14) abschließend in der Führungsnut (18) geführt ist.

19. Kanne nach wenigstens einem der vorangehenden Ansprüche,
**dadurch gekennzeichnet,**
**daß** das Zugelement (15) im Bereich des Henkels (14) eine Handhabe (22) aufweist.

20. Kanne nach wenigstens einem der vorangehenden Ansprüche,
**dadurch gekennzeichnet,**
**daß** das Zugelement (15) an seinem dem Siebkörper (5) zugeordneten Ende (40) als Haltehaken (23) ausgebildet ist.

21. Kanne nach wenigstens einem der vorangehenden Ansprüche,
**dadurch gekennzeichnet,**
**daß** der Führungseinrichtung (18) und/oder dem Henkel (14) eine Arretiereinrichtung (24) zur Festlegung des Zugelementes (15) zumindest in seiner zweiten Stellung (17) zugeordnet ist.

22. Kanne nach wenigstens einem der vorangehenden Ansprüche,
**dadurch gekennzeichnet,**
**daß** die Arretiereinrichtung (24) als Verengung (25) der Führungsnut (18) ausgebildet ist.

23. Kanne nach wenigstens einem der vorangehenden Ansprüche,
**dadurch gekennzeichnet,**
**daß** eine Arretiereinrichtung (24) in Form eines Rasthakens (50) am Zugelement (15) und einer zugeordneten Rastnase (51) in der Führungseinrichtung vorgesehen ist.

24. Kanne nach wenigstens einem der vorangehenden Ansprüche,
**dadurch gekennzeichnet,**
**daß** der Rasthaken (50) am Endbereich (47) des Zugelementes (15) und die Rastnase (51) in der Führungsnut (18) des Henkels (14) ausgebildet ist.

25. Kanne nach wenigstens einem der vorangehenden Ansprüche,
**dadurch gekennzeichnet,**
**daß** für jede Stellung des Zugelementes (15) eine gesonderte Rastnase (51) in der Führungsnut (18) angeordnet ist.

26. Kanne nach wenigstens einem der vorangehenden Ansprüche,
**dadurch gekennzeichnet,**
**daß** der Kannenkörper (3) ein unteres, mit dem Henkel (14) und/oder dem Aufsatzteil (12) verbundenes Fußteil (26) aufweist.

27. Kanne nach wenigstens einem der vorangehenden Ansprüche,
**dadurch gekennzeichnet,**
**daß** das Fußteil (26) über einen Klemmechanismus an dem unteren Bereich des Kannenkörpers (3) lösbar festgeklemmt ist.

28. Kanne nach wenigstens einem der vorangehenden Ansprüche,
**dadurch gekennzeichnet,**
**daß** das Fußteil (26) aus einem wärmestabilen Material, insbesondere einem Metall, besteht.

29. Kanne nach wenigstens einem der vorangehenden Ansprüche,
**dadurch gekennzeichnet,**
**daß** der Kannenkörper (3) auf seiner Außenseite (27) wenigstens eine Umfangsnut (289 zur Aufnahme eines mit seinen beiden Enden (29, 30) am Henkel (14) befestigten Drahtes (31) aufweist.

30. Kanne nach wenigstens einem der vorangehenden Ansprüche,
**dadurch gekennzeichnet,**
**daß** die beiden Enden (29, 30) seitlich entlang der Führungsnut (18) für das Zugelement (15) im Henkel (14) bis in Nachbarschaft zum Deckel (9) geführt sind.

31. Kanne nach wenigstens einem der vorangehenden Ansprüche,
**dadurch gekennzeichnet,**
**daß** der Henkel (14) einen mit der Führungsnut (18) ausgebildeten Außenschenkel (32) und einen an der Außenseite (27) des Kannenkörpers (3) anliegenden Innenschenkel (33) aufweist, welche miteinander an ihren Enden (34, 35) unter Einschluß einer Eingriffsöffnung (36) verbunden sind.

32. Kanne nach wenigstens einem der vorangehenden Ansprüche,
**dadurch gekennzeichnet,**
**daß** das Fußteil (26) einen in Richtung Henkel (4), bzw. Deckel (9) verlaufenden und mit diesem verbundenen Verbindungsträger (37) aufweist.

33. Kanne nach wenigstens einem der vorangehenden Ansprüche,
**dadurch gekennzeichnet,**
**daß** der Siebkörper (5) aufklappbar und/oder teilbar in zwei Hälften (38, 39) ausgebildet ist.

34. Kanne nach wenigstens einem der vorangehenden Ansprüche,
**dadurch gekennzeichnet,**
**daß** der Siebkörper (5) im wesentlichen parallel zu einer oder in einer vom Zugelement (15) aufgespannten Ebene in eine linke und eine rechte Siebkörperhälfte (38, 39) geteilt ist.

35. Kanne nach wenigstens einem der vorangehenden Ansprüche,
**dadurch gekennzeichnet,**
**daß** an dem dem Siebkörper (5) zugeordneten Ende (40) des Zugelementes (15) ein Ring (52) angeordnet ist, an dem zumindest eine der beiden Siebkörperhälften (38, 39) aufsetzbar und zum Bilden des Siebkörpers (5) mit diesem verbindbar sind.

36. Kanne nach wenigstens einem der vorangehenden Ansprüche,
**dadurch gekennzeichnet,**
**daß** die mindestens eine Siebkörperhälfte (38, 39) mittels eines bajonettartigen Verschlusses (53, 54) miteinander oder am Ring (52) verbunden sind oder ist.

37. Kanne nach wenigstens einem der vorangehenden Ansprüche,
**dadurch gekennzeichnet,**
**daß** eine Siebkörperhälfte (39) fest mit dem Zugelement (15) verbunden ist und die andere Siebkörperhälfte (38) lösbar mit dem Zugelement (15) verbunden bzw. verbindbar ist.

38. Kanne nach wenigstens einem der vorangehenden Ansprüche,
**dadurch gekennzeichnet,**
**daß** der Kannenkörper (3) aus einem durchsichtigen, hitzebeständigen Material, insbesondere Glas, gebildet ist.

39. Kanne nach wenigstens einem der vorangehenden Ansprüche,
**dadurch gekennzeichnet,**
**daß** der Kannenkörper (3) ausgebaucht ist.

## Claims

1. A tea/coffee pot (1) comprising a pot body (3) designed to be filled with a liquid (2), and a strainer body (5) which is arranged therein and is pivotable by means of a handling device between a submerged position (4) and an emerged position (7), and which comprises at least one compartment (6) for receiving an additional substance, such as tea leaves, ground coffee, or the like,
**characterized in**
**that** said handling device comprises a pull element (15) for pivoting said strainer body (5), and that said pot body (3) has provided thereon a guiding device (18, 19) in which said pull element (15) is displaceably guided along a predetermined path for pivoting said strainer body (5).

2. The pot according to claim 1,
**characterized in**
**that** said pull element (15) is guided in longitudinally displaceable fashion in said guide means along a curved path which is in particular convex relative to a pot axis (A).

3. The pot according to claim 1 or 2,
**characterized in**
**that** said pull element (15) is a substantially rigid component adapted to the path predetermined by said guiding device.

4. The pot according to at least one of the preceding claims,
**characterized in**
**that** said pull element (15) in the emerged position (7) of said strainer body (5) is predominantly withdrawn into said guiding device and held therein.

5. The pot according to at least one of the preceding claims, comprising a lid (9) which is mountable on an upper pot opening (8),
**characterized in**
**that** said lid (9) has an interior (10) which is open towards said upper pot opening (8) and in which said strainer body (5) in said emerged position (7) is arranged at least in part.

6. The pot according to at least one of the preceding claims,
**characterized in**
**that** a handle (14) is arranged on said pot body (3), said handle (14) forming at least part of said guiding device.

7. The pot according to at least one of the preceding claims,
**characterized in**
**that** the path predetermined by said guiding device is adapted to the shape of said handle.

8. The pot according to at least one of the preceding claims,
**characterized in**
**that** said handle (14) comprises a guide groove (18) as part of said guiding device which extends substantially along the longitudinal extension of said handle and in which said pull element (15) correspondingly molded thereon is displaceably supported between a first position (16) assigned to the submerged position (4) of said strainer body (5) and a second position (17) assigned to the emerged position (7) of said strainer body (5).

9. The pot according to at least one of the preceding claims,
**characterized in**
**that** said handle (14), said guide groove (18) and said pull element (15) are substantially curved in the manner of a circular arc and are insertable into one another accordingly.

10. The pot according to at least one of the preceding claims,
**characterized in**
**that** the upper pot opening (8) is formed at the upper end (11) of said pot body (3).

11. The pot according to at least one of the preceding claims,
**characterized in**
**that** an attachment member (12) is mounted on an upper end (11) of said pot body (3) and is formed at least with a spout (13) and an upper pot opening (18).

12. The pot according to at least one of the preceding claims,
**characterized in**
**that** said handle (14) is molded onto said attachment member (12).

13. The pot according to at least one of the preceding claims,
**characterized in**
**that** said handle (14) is detachably secured to said pot body (3).

14. The pot according to at least one of the preceding claims,
**characterized in**
**that** said handle (14) is glued to said pot body (3).

15. The pot according to at least one of the preceding claims,
**characterized in**
**that** an opening (19) is formed between lid (9) and pot body (3) or attachment member (12) or in said attachment member (12) for passing said pull element (15) therethrough towards said handle (14), said opening (19) forming part of said guiding device.

16. The pot according to at least one of the preceding claims,
**characterized in**
**that** said pull element (15) is formed from a flat section having at least one slide surface which is movable along said guide groove (18).

17. The pot according to at least one of the preceding claims,
**characterized in**
**that** said guide groove (18) is formed on an outside (21) of said handle (14).

18. The pot according to at least one of the preceding claims,
**characterized in**
**that** said guide groove (18) in said handle (14) is substantially V-shaped in cross-section, and said flat section of said pull element (15) has a correspondingly adapted cross-section so that said pull element (15) is guided in said guide groove (18) to be substantially flush with the outer contour of said handle (14).

19. The pot according to at least one of the preceding claims,
**characterized in**
**that** said pull element (15) comprises a handling device (22) in the area of said handle (14).

20. The pot according to at least one of the preceding claims,
**characterized in**
**that** said pull element (15) is designed as a holding hook (23) at its end (40) assigned to said strainer body (5).

21. The pot according to at least one of the preceding claims,
**characterized in**
**that** said guiding device (18) and/or said handle (14) has/have assigned thereto an arresting device (24) for fixing said pull element (15) at least in its second position (17).

22. The pot according to at least one of the preceding claims,
**characterized in**
**that** said arresting device (24) is designed as a constricted portion (25) of said guide groove (18).

23. The pot according to at least one of the preceding claims,
**characterized in**
**that** an arresting device (24) is provided in the form of a locking hook (50) on said pull element (15) and of an associated locking nose (51) in said guiding device.

24. The pot according to at least one of the preceding claims,
**characterized in**
**that** said locking hook (50) is formed on the end portion (47) of said pull element (15) and said locking nose (51) in said guide groove (18) of said handle (14).

25. The pot according to at least one of the preceding claims,
**characterized in**
**that** a separate locking nose (51) is arranged in said guide groove (18) for each position of said pull element (15).

26. The pot according to at least one of the preceding claims,
**characterized in**
**that** said pot body (3) comprises a lower base member (26) connected to said handle (14) and/or said attachment member (12).

27. The pot according to at least one of the preceding claims,
**characterized in**
**that** said base member (26) is detachably clamped by means of a clamping mechanism to the lower portion of said pot body (3).

28. The pot according to at least one of the preceding claims,
**characterized in**
**that** said base member (26) is made from a thermally stable material, in particular, from metal.

29. The pot according to at least one of the preceding claims,
**characterized in**
**that** said pot body (3) is provided on the outside (27) thereof with at least one circumferential groove (28) for receiving a wire (31) which is secured with both of its ends (29, 30) to said handle (14).

30. The pot according to at least one of the preceding claims,
**characterized in**
**that** said two ends (29, 30) are laterally guided along said guide groove (18) for said pull element (15) in said handle (14) into the vicinity of said lid (9).

31. The pot according to at least one of the preceding claims,
**characterized in**
**that** said handle (14) comprises an outer leg (32) formed with said guide groove (18) and an inner leg (33) resting on the outside (27) of said pot body (3), said legs being interconnected at the ends (34, 35) thereof to enclose a grip opening (36).

32. The pot according to at least one of the preceding claims,
**characterized in**
**that** said base member (26) comprises a connection carrier (37) which extends in the direction of said handle (14) or lid (9) and is connected thereto.

33. The pot according to at least one of the preceding claims,
**characterized in**
**that** said strainer body (5) is designed such that it can be unfolded and/or divided into two halves (38, 39).

34. The pot according to at least one of the preceding claims,
**characterized in**
**that** said strainer body (5) is divided into a left and right strainer body half (38, 39) substantially in parallel with or in a plane formed by said pull element (15).

35. The pot according to at least one of the preceding claims,
**characterized in**
**that** the end (40) of said pull element (15) which is assigned to said strainer body (5) has arranged thereon a ring (52) on which at least one of said two strainer body halves (38, 39) is mountable and connectable to said strainer body (5) for the formation thereof.

36. The pot according to at least one of the preceding claims,
**characterized in**
**that** said at least one strainer body half (38, 39) is connected by means of a bayonet-like catch (53, 54) to the other strainer body half or on said ring (52).

37. The pot according to at least one of the preceding claims,
**characterized in**
**that** one strainer body half (39) is fixedly connected to said pull element (15) and said other strainer body half (38) is detachably connected or connectable to said pull element (15).

38. The pot according to at least one of the preceding claims,
**characterized in**
**that** said pot body (3) is made from a transparent, heat-resistant material, in particular glass.

39. The pot according to at least one of the preceding claims,
**characterized in**
**that** said pot body (3) is bulged.

## Revendications

1. Théière/cafetière (1) comprenant un corps de théière/cafetière (3) réalisé pour le remplissage d'un liquide (2) et un corps de filtre (5) disposé dans ce dernier, pouvant pivoter au moyen d'un dispositif de manipulation entre une position d'immersion (4) et une position d'émersion (7), et qui présente au moins un compartiment (6) pour recevoir un ajout, tel que feuilles de thé, café moulu, ou autres, **caractérisée en ce que** l'élément de manipulation comprend un élément de traction (15) pour le pivotement du corps de filtre (5), et **en ce qu'**il est prévu sur le corps de théière/cafetière (3) un dispositif de guidage (18, 19), dans lequel est guidé l'élément de traction (15) avec une possibilité de déplacement le long d'une trajectoire prédéfinie pour le pivotement du corps de filtre (5).

2. Théière/cafetière suivant la revendication 1, **caractérisée en ce que** l'élément de traction (15) est guidé avec une possibilité de déplacement longitudinal dans le dispositif de guidage sur une trajectoire incurvée, en particulier convexe par rapport à un axe (A) de la théière/cafetière.

3. Théière/cafetière suivant l'une des revendications 1 et 2, **caractérisée en ce que** l'élément de traction (15) est un composant essentiellement rigide, adapté à la trajectoire prédéfinie par le dispositif de guidage.

4. Théière/cafetière suivant l'une au moins des revendications précédentes, **caractérisée en ce que** l'élément de traction (15) est rentré en majeure partie, dans la position d'émersion (7) du corps de filtre (5), dans le dispositif de guidage et est maintenu dans ce dernier.

5. Théière/cafetière suivant l'une au moins des revendications précédentes, comprenant un couvercle (9) qui peut être mis en place sur une ouverture supérieure (8) de la théière/cafetière, **caractérisée en ce que** le couvercle (9) présente un espace intérieur (10) ouvert en direction de l'ouverture supérieure (8) de la théière/cafetière, dans lequel est disposé au moins en partie le corps de filtre (5) en position d'émersion (7).

6. Théière/cafetière suivant l'une au moins des revendications précédentes, **caractérisée en ce qu'**une anse (14) est disposée sur le corps (3) de la théière/cafetière, l'anse (14) formant au moins une partie intégrante du dispositif de guidage.

7. Théière/cafetière suivant l'une au moins des revendications précédentes, **caractérisée en ce que** la trajectoire prédéfinie par le dispositif de guidage est adaptée à la forme de l'anse.

8. Théière/cafetière suivant l'une au moins des revendications précédentes, **caractérisée en ce que** l'anse (14) présente en tant que partie intégrante du dispositif de guidage une rainure de guidage (18) s'étendant essentiellement le long de son extension longitudinale, dans laquelle l'élément de traction (15) conformé en conséquence est monté avec une possibilité de déplacement entre une première et une seconde positions (16, 17), respectivement associées à la position d'immersion (4) du corps de filtre (5) et à la position d'émersion (7) du corps de filtre (5).

9. Théière/cafetière suivant l'une au moins des revendications précédentes, **caractérisée en ce que** l'anse (14), la rainure de guidage (18) et l'élément de traction (15) sont incurvés essentiellement en arc de cercle et sont emboîtables en conséquence les uns dans les autres.

10. Théière/cafetière suivant Tune au moins des revendications précédentes, **caractérisée en ce que** l'ouverture supérieure (8) de la théière/cafetière est réalisée sur l'extrémité supérieure (11) du corps de théière/cafetière (3).

11. Théière/cafetière suivant l'une au moins des revendications précédentes, **caractérisée en ce qu'**une pièce rapportée (12) est mise en place sur une extrémité supérieure (11) du corps de théière/cafetière (3), et est réalisée au moins avec un bec verseur (13) et une ouverture supérieure (18) de la théière/cafetière.

12. Théière/cafetière suivant l'une au moins des revendications précédentes, **caractérisée en ce que** l'anse (14) est conformée sur la pièce rapportée (12).

13. Théière/cafetière suivant l'une au moins des revendications précédentes, **caractérisée en ce que** l'anse (14) est fixée de façon amovible sur le corps de théière/cafetière (3).

14. Théière/cafetière suivant l'une au moins des revendications précédentes, **caractérisée en ce que** l'anse (14) est collée avec le corps de théière/cafetière (3).

15. Théière/cafetière suivant l'une au moins des revendications précédentes, **caractérisée en ce qu'**une ouverture (19) est réalisée entre le couvercle (9) et le corps de théière/cafetière (3) ou la pièce rapportée (12) ou dans la pièce rapportée (12) pour le passage de l'élément de traction (15) en direction de l'anse (14), l'ouverture (19) faisant partie intégrante du dispositif de guidage.

16. Théière/cafetière suivant l'une au moins des revendications précédentes, **caractérisée en ce que** l'élément de traction (15) est formé d'un profilé plat avec au moins une surface de glissement, qui peut ou peuvent se déplacer le long de la rainure de guidage (18).

17. Théière/cafetière suivant l'une au moins des revendications précédentes, **caractérisée en ce que** la rainure de guidage (18) est réalisée sur un côté extérieur (21) de l'anse (14).

18. Théière/cafetière suivant l'une au moins des revendications précédentes, **caractérisée en ce que** la rainure de guidage (18) dans l'anse (14) a une section transversale essentiellement en V et le profilé plat de l'élément de traction (15) présente une section transversale adaptée en conséquence, si bien que l'élément de traction (15) est guidé dans la rainure de guidage (18) essentiellement en affleurement avec le contour extérieur de l'anse (14).

19. Théière/cafetière suivant l'une au moins des revendications précédentes, **caractérisée en ce que** l'élément de traction (15) présente une prise (22) dans la zone de l'anse (14).

20. Théière/cafetière suivant l'une au moins des revendications précédentes, **caractérisée en ce que** l'élément de traction (15) est réalisé sous forme de crochet de retenue (23) sur son extrémité (40) associée au corps de filtre (5).

21. Théière/cafetière suivant l'une au moins des revendications précédentes, **caractérisée en ce qu'**un dispositif d'arrêt (24) est associé au dispositif de guidage (18) et/ou à l'anse (14) pour la fixation de l'élément de traction (15) au moins dans sa seconde position (17).

22. Théière/cafetière suivant Tune au moins des revendications précédentes, **caractérisée en ce que** le dispositif d'arrêt (24) est réalisé sous forme de rétrécissement (25) de la rainure de guidage (18).

23. Théière/cafetière suivant l'une au moins des revendications précédentes, **caractérisée en ce qu'**un dispositif d'arrêt (24) est prévu en forme d'un crochet d'encliquetage (50) sùr l'élément de traction (15) et d'un ergot d'encliquetage (51) associé dans le dispositif de guidage.

24. Théière/cafetière suivant l'une au moins des revendications précédentes, **caractérisée en ce que** le crochet d'encliquetage (50) est réalisé sur la zone extrême (47) de l'élément de traction (15) et l'ergot d'encliquetage (51) dans la rainure de guidage (18) de l'anse (14).

25. Théière/cafetière suivant l'une au moins des revendications précédentes, **caractérisée en ce qu'**un ergot d'encliquetage séparé (51) est disposé dans la rainure de guidage (18) pour chaque position de l'élément de traction (15).

26. Théière/cafetière suivant l'une au moins des revendications précédentes, **caractérisée en ce que** le corps de théière/cafetière (3) présente une partie de base inférieure (26), assemblée avec l'anse (4) et/ou la pièce rapportée (12).

27. Théière/cafetière suivant l'une au moins des revendications précédentes, **caractérisée en ce que** la partie de base (26) est coincée de façon amovible par l'intermédiaire d'un mécanisme de serrage sur la zone inférieure du corps de théière/cafetière (3).

28. Théière/cafetière suivant l'une au moins des revendications précédentes, **caractérisée en ce que** la partie de base (26) se compose d'un matériau thermostable, en particulier d'un métal.

29. Théière/cafetière suivant l'une au moins des revendications précédentes, **caractérisée en ce que** le corps de théière/cafetière (3) présente sur son côté extérieur (27) au moins une rainure périphérique (28) pour recevoir un fil (31) fixé par ses deux extrémités (29, 30) sur l'anse (14).

30. Théière/cafetière suivant l'une au moins des revendications précédentes, **caractérisée en ce que** les deux extrémités (29, 30) sont guidées latéralement le long de la rainure de guidage (18) pour l'élément de traction (15) dans l'anse (14) jusqu'au voisinage du couvercle (9).

31. Théière/cafetière suivant l'une au moins des revendications précédentes, **caractérisée en ce que** l'anse (14) présente une branche extérieure (32) réalisée avec la ramure de guidage (18) et une branche intérieure (33) limitrophe au côté extérieur (27) du corps de théière/cafetière (3), qui sont assemblées entre elles sur leurs extrémités (34, 35) en incluant une ouverture de prise (36).

32. Théière/cafetière suivant l'une au moins des revendications précédentes, **caractérisée en ce que** la partie de base (26) présente un support d'assemblage (37) s'étendant en direction de l'anse (4) ou du couvercle (9) et assemblé avec cette dernière.

33. Théière/cafetière suivant l'une au moins des revendications précédentes, **caractérisée en ce que** le corps de filtre (5) est rabattable et/ou partageable en deux moitiés (38, 39).

34. Théière/cafetière suivant l'une au moins des revendications précédentes, **caractérisée en ce que** le corps de filtre (5) est partagé en une moitié de corps de filtre (38, 39) gauche et droite de façon essentiellement parallèle à ou dans un plan fixé par l'élément de traction (15).

35. Théière/cafetière suivant l'une au moins des revendications précédentes, **caractérisée en ce qu'**une bague (52) est disposée sur l'extrémité (40) de l'élément de traction (15) associée au corps de filtre (5), au moins l'une des deux moitiés de corps de filtre (38, 39) pouvant être mise en place sur cette bague et être assemblée avec cette dernière pour former le corps de filtre (5).

36. Théière/cafetière suivant l'une au moins des revendications précédentes, **caractérisée en ce que** la moitié de corps de filtre (38, 39), au moins, est assemblée ou sont assemblées entre elles au moyen d'un joint à baïonnette (53, 54) ou sur la bague (52).

37. Théière/cafetière suivant l'une au moins des revendications précédentes, **caractérisée en ce qu'**une moitié de corps de filtre (39) est assemblée fixement avec l'élément de traction (15), et l'autre moitié de corps de filtre (38) est assemblée ou peut être assemblée de façon amovible avec l'élément de traction (15).

38. Théière/cafetière suivant l'une au moins des revendications précédentes, **caractérisée en ce que** le corps de théière/cafetière (3) est formé d'un matériau transparent, résistant à la chaleur, en particulier de verre.

39. Théière/cafetière suivant l'une au moins des revendications précédentes, **caractérisée en ce que** le corps de théière/cafetière (3) est renflé.
